Europäisches Patentamt

European Patent Office

Office européen des brevets

(19)

(11) Publication number: **0 001 690**
**B1**

(12) **EUROPEAN PATENT SPECIFICATION**

(45) Date of publication of patent specification:
29.04.81

(51) Int. Cl.³: **B 65 D 8/22**, B 65 D 51/20

(21) Application number: 78300437.7

(22) Date of filing: 29.09.78

(54) Containers.

(30) Priority: 19.10.77 GB 4352277

(43) Date of publication of application:
02.05.79 Bulletin 79/9

(45) Publication of the grant of the patent:
29.04.81 Bulletin 81/17

(84) Designated Contracting States:
BE DE FR NL

(56) References cited:
**FR-A-1 214 540**
**GB-A-1 087 437**
**US-A-1 788 261**
**US-A-2 255 802**

(73) Proprietor: METAL BOX LIMITED, Queens House,
Forbury Road, Reading RG1 3JH Berkshire (GB)

(72) Inventor: Imber, William Ivan, "Carosal" 27A Tippendell
Lane, St. Albans Hertfordshire (GB)

(74) Representative: Wright, Peter David John et al, R.G.C.
Jenkins & Co. 53-64 Chancery Lane, London WC2A 1QU
(GB)

Containers

This invention relates to containers and in particular to metal cans.

There has for many years been a requirement for metal cans which have a hermetically sealed but readily openable top but which can be supplied to the product manufacturer with the bottom completely open so that the manufacturer can fill the can with product through its open bottom, while the can is inverted, and then himself apply a hermetically sealed bottom to the can, for example using the well known rolled double seam, to complete the canning of the product. The user of the product then gains access to the product by opening the easily openable hermetically sealed top of the can.

Such cans have had a can body with a side seam, rather than a drawn can body, in order that the can may initially be provided with an open bottom.

Early approaches to providing cans of this form involved applying a diaphragm to close the top end of the can body using a permanent (as distinct from strippable) adhesive. To gain access to the product, the diaphragm would then have to be pierced and at least partly torn away. A similar technique was also used, using a strippable adhesive, for products which did not require a hermetic top seal.

In the latter case, that form of construction has proved satisfactory but, where hermetic sealing is required, the above-described technique was not successful because there was always a certain degree of leakage in the region of the seam at the curled top edge.

Attempts to solve the problem have involved giving the upper edge portion of the can a more complex structure so that the edge of the diaphragm can be gripped between can body portions which are squeezed towards each other as, for example, disclosed in British Specification No. 1,361,415 and U. S. Specification No. 3,358,876, and also in British Specification No. 491,671.

Although in principle satisfactory, in practice such techniques have not been completely acceptable because in mass production it has been found that hermetic seals cannot always be achieved, and the tooling required to apply the diaphragm has been extremely expensive because of the relatively complex operations to be carried out, and consequently the process was not economically very attractive.

The use of diaphragms as hermetically sealed can tops has therefore for many years been rejected as a way of providing reliable hermetic seals at low cost. Instead, manufacturers have resorted to the use of »easy-open« metal tops of the kind which are now well known and include a tear-off portion defined by a score line and which can be torn away from the main part of the top normally using a pull ring, the complete top being secured by the can manufacture to the can body using a rolled double seal around the top edge of the can body in the well known manner. Hermetic sealing can be very reliably achieved in this way, but the cost of producing the »easy-open« top is high. Also, this type of top exposes sharp edges when opened and is therefore to a certain extent dangerous. Work has continued on reducing the cost and reducing the danger from exposed edges.

We have now found a solution to these problems and, contrary to general development in this particular field, we employ a diaphragm and yet manage to obtain the reliable hermetic sealing in mass production, which has previously been achieved using »easy-open« metal tops. A substantial reduction in the cost of production of cans with hermetically sealed tops, but initially open bottoms, results, and the safety problems of »easy-open« tops are avoided.

The invention provides a metal can having a body with a side seam, the edge of the can at one end thereof being curled, and said one end being closed by a diaphragm adhesively secured to said curled edge, characterised in that the side seam is mash welded so as to be crevicefree on at least the inner or outer surface of the can body, the curled edge is curled in a direction such as to place said surface on which the seam is crevicefree on the outside of the curl, and the thickness of adhesive between the diaphragm and the outside of the curl is sufficient to fill any step which may be present at the seam on the outside of the curl.

Normally, mash welding provides a crevice-free seam on both the inner and outer surfaces of the can body. By »mash welded« we mean seamed using the technique in which the welded margins of the can body are at the same time squeezed tightly together thus substantially eliminating crevices between the overlapping margins and also greatly reducing the height of the »step« normally present each side of an ordinary lapped and welded seam.

Preferably the seam is crevice-free on at least the inner surface of the can body and said edge is curled outwards.

The diaphragm may be of laminated material, and preferably includes a heat sealable layer which is sealed to said curled edge of the can body and forms said adhesive.

Also, it is preferred to neck the can body adjacent the curled edge and also, as in the embodiment which will be described, to make the can body from double reduced (DR) tin plate, thus further reducing the height of the steps either side of the seam.

In order that the invention may be more clearly understood, a preferred embodiment thereof will now be described, by way of example, with reference to the drawings, in which:

Figure 1 is a cross-section, taken on the central axis, of a can in accordance with the invention;

Figure 2 shows a bottom applied to the can of Figure 1;

Figure 3 illustrates, for the sake of clarity, a mash weld as a way of obtaining a crevice-free surface; and

Figure 4 shows how crevices occur at a lap welded seam.

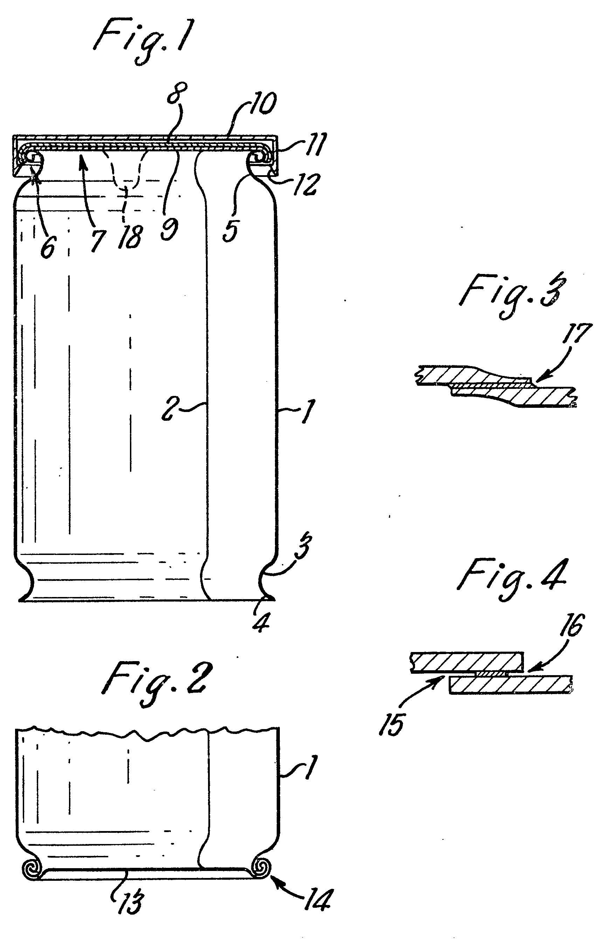

Figure 1 shows a can body 1 in cross-section (the walls are shown as single lines for simplicity), the body having a side seam 2 formed by mash welding. The lower end of the can body is necked at 3 and flanged at 4 for a purpose which will be described below.

Near its top edge the can body is necked at 5 and the top edge itself is curled outwardly as generally indicated at 6. The outside of the curl is crevice-free as will be further explained below.

The upper end of the can is hermetically sealed by a diaphragm generally indicated at 7 and which is laminated, having an outer metal foil layer 8 and an inner plastics adhesive layer 9. Preferably the layer 9 is of the material commercially available under the Trade Mark SURLYN which is a copolymer of ethylene and acrylic acid in which some of the acid has been reacted with a metal ion. An alternative adhesive material is available under the Trade Mark KUROPLAST and comprises a copolymer of ethylene and acrylic acid in which some of the acid has been reacted to an ester.

A lid 10 made of a plastics material is also provided which has a downwardly extending flange 11 having at its edge an inward annular projection 12 so that the lid can be a snap fit over the sealed top of the can. It should be noted that the top of the can has a diameter slightly less than the main part of the can body so that the edges of the lid can be flush with the walls of the can body. A similar lid 10 may be made from metal if required, again having a snap fit. The lid 10 ist used to enclose the contents of the can after the diaphragm 9 has been pierced and torn away by the eventual user of the product in the can.

The diaphragm 7 can be adhesively secured to the top edge of the can by placing it within the lid 10, which serves as a holder for the diaphragm, applying the lid and diaphragm to the top of the can as shown and then applying a heating head to the outside of the lid 10 so as to raise the diaphragm 9 to a temperature where the adhesive 9 becomes sticky and forms a bond with the rolled edge 6 of the can.

Alternatively, to facilitate inspection of the applied diaphragm, a special holder generally similar in shape to the lid 10 my be employed to apply the diaphragm to the can top, the holder then being removed to expose the diaphragm. This saves having to remove the lid 10 of every can coming off a production line in order to check that the diaphragm is properly applied.

Cans in accordance with the invention will be supplied to a product manufacturer as shown in Figure 1, with the bottoms open. The product manufacturer will then invert the can, fill it with product through the open bottom, and then seal the bottom of the can using a pre-formed can bottom 13 as shown in Figure 2, which is sealed to the lower edge of the can body 1 using a standard double seam as indicated at 14, which seam comes within the maximum diameter of the can body owing to the neck portion 3.

The invention is not usable with welded seams which involve crevices on the inner and outher walls of the can body as shown for example in Figure 4. That Figure shows a standard overlapped and welded seam where crevices 15 and 16 occur between the overlapped margins on opposite sides of the weld line. If such a seam were curled either outwardly or inwardly at the top edge of the can and the diaphragm applied as described, one or other of the crevices would provide a small channel leading from atmosphere around the outside of the curl ard into the can interior, thus spoiling the hermetic seal.

In a mash welded seam, as shown in Figure 3, which can be produced by a known technique, the weld material 17 preferatly completely fills the overlap area thus leaving no crevices on either side. Additionally, owing to pressure applied while welding, the metal is squeezed thinner at the seam so that the steps either side of the seam are substantially lower than in the type of weld shown in Figure 4. The height of the steps is preferably not more than 40% of the thickness of the original tin plate. When a seam as shown in Figure 3 is curled at the top edge of the can it cannot form a channel leading over and around the top edge and the adhesive 9 on the diaphragm is readily able to fill the relatively small irregularity which does exist on the otherwise very smooth curled top edge of the can.

It should be appreciated that it is necessary for only the surface on the outside of the curl to be crevice-free, so that a seam which is crevice-free on one side of the can wall, but not on the other, may be employed provided the crevice-free side is on the outside of the curl.

Also, although it is preferred to reduce the size of the step at the seam, to the extent shown in Figure 3, a larger step may be present because an adhesive coating 9 with sufficient thickness to fill the angle of the step is employed. As already explained, no crevice should exist at the bottom of the step because the adhesive cannot readily fill such a crevice and hence it will provide the leakage channel already referred to.

The advantages of the invention where a hermetically sealed top is required have already been described. However, it should be appreciated that the invention may also be employed where hermetic sealing is not required owing to the nature of the product being canned. Then, it may be preferable for the diaphragm 7 to be adhered to the top edge of the can with a weaker adhesive so that it can be stripped off the top edge of the can by peeling it back, breaking the adhesive bond, rather than having to pierce and tear the diaphragm itself. In this case, the diaphragm may be provided with a pull tab as indicated in broken lines at 18 in Figure 1.

The inventiox also permits the can body to be made from double reduced tin plate which is noted for its relatively high tensile strength. Thinner side walls are therefore possible so that less metal is used.

## Claims

1. A metal can having a body with a side seam, the edge of the can at one end thereof being curled, and said one end being closed by a diaphragm adhesively secured to said curled edge, characterised in that the side seam (2) is mash welded so as to be crevice-free on at least the inner or outer surface of the can body, the curled edge (6) is curled in a direction such as to place said surface on which the seam is crevice-free on the outside of the curl, and the thickness of adhesive (9) between the diaphragm and the outside of the curl is sufficient to fill any step which may be present at the seam on the outside of the curl.

2. A can as claimed in claim 1, wherein the seam is crevice-free on at least the inner surface of the can body and said edge is curled outwards.

3. A can as claimed in any preceding claim, wherein the diaphragm is of laminated material (8, 9).

4. A can as claimed in claim 3, wherein the diaphragm includes a heat sealable layer (9) sealed to said curled edge and forming said adhesive.

5. A can as claimed in claim 4, wherein the heat sealable layer is of a copolymer of ethylene and acrylic acid in which some of the acid has been reacted with a metal ion.

6. A can as claimed in claim 4, wherein the heat sealable layer is of a copolymer of ethylene and acrylic acid in which some of the acid has been reacted to an ester.

7. A can as claimed in any preceding claim, wherein the can body is necked (5) adjacent the curled edge.

8. A can as claimed in any preceding claim, wherein the can body is of double reduced plate.

## Patentansprüche

1. Metalldose, mit einem Dosenkörper, der eine seitliche Naht und an einem Ende einen umgebördelten Rand besitzt, wobei das eine Ende durch ein dünnes Bodenblech verschlossen ist, welches mittels eines Klebstoffs am umgebördelten Rand befestigt ist, dadurch gekennzeichnet, daß die seitliche Naht (2) mit Überlappstoß preßverschweißt ist, daß zumindest die innere oder die äußere Oberfläche des Dosenkörpers fugenfrei ist, daß der umgebördelte Rand (6) in eine Richtung gebördelt ist, so daß die fugenfreie Oberfläche auf die Außenseite der Umbördelung gekehrt ist, und daß die Dicke des Klebstoffs (9) zwischen dem dünnen Bodenblech und der Außenseite der Umbördelung ausreichend groß ist, um jegliche, an der Naht auf der Außenseite der Umbördelung auftretende Stufe aufzufüllen.

2. Metalldose nach Anspruch 1, dadurch gekennzeichnet, daß die Nut zumindest auf der Innenoberfläche des Dosenkörpers fugenfrei ist und daß der Rand nach außen gebördelt ist.

3. Metalldose nach einem der vorhergehenden Ansprüche, dadurch gekennzeichnet, daß das dünne Bodenblech aus laminiertem Werkstoff bzw. Schichtstoff (8, 9) besteht.

4. Metalldose nach Anspruch 3, dadurch gekennzeichnet, daß das dünne Bodenblech eine warmverschweißbare Schicht (9) besitzt, die mit dem umgebördelten Rand eine abdichtende Verbindung eingeht und den Klebstoff darstellt.

5. Metalldose nach Anspruch 4, dadurch gekennzeichnet, daß die warmverschweißbare Schicht ein Copolymerisat aus Äthylen und Acrylsäure darstellt, wobei ein Teil der Säure mit einem Metallion umgesetzt ist.

6. Metalldose nach Anspruch 4, dadurch gekennzeichnet, daß die warmverschweißbare Schicht ein Copolymerisat aus Äthylen und Acrylsäure darstellt, wobei ein Teil der Säure zu einem Ester umgesetzt ist.

7. Metalldose nach einem der vorhergehenden Ansprüche, dadurch gekennzeichnet, daß der Dosenkörper im Bereich des umgebördelten Rands eine Einschnürung (5) besitzt.

8. Metalldose nach einem der vorhergehenden Ansprüche, dadurch gekennzeichnet, daß der Dosenkörper aus einem Blech besteht, welches auf beiden sich überlappenden Seiten in seiner Dicke reduziert ist.

## Revendications

1. Boîte métallique présentant un corps à joint latéral, le bord de boîte situé à une première extrémité de la boîte étant ourlé, et cette première extrémité étant fermée par un diaphragme fixé par adhésif audit bord ourlé, caractérisée en ce que le joint latéral (2) est soudé par écrasement de façon à être exempt de fissure sur l'une au moins des faces intérieure et extérieure du corps de boîte, en ce que le bord ourlé (6) est roulé dans le sens voulu pour que ladite face sur laquelle le joint est exempt de fissure soit située sur l'extérieur de l'ourlet, et en ce que l'épaisseur d'adhésif (9) interposée entre le diaphragme et l'extérieur de l'ourlet est suffisante pour combler toute dénivellation éventuellement présente au niveau du joint sur l'extérieur de l'ourlet.

2. Boîte selon la revendication 1, caractérisée en ce que le joint est exempt de fissure au moins sur la face intérieure du corps de boîte et en ce que ledit bord est ourlé vers l'extérieur.

3. Boîte selon l'une quelconque des revendications précédentes, caractérisée en ce que le diaphragme est en matière laminée (8, 9).

4. Boîte selon la revendication 3, caractérisée en ce que le diaphragme comporte une couche soudable à chaud (9) hermétiquement réunie audit bord ourlé et qui constitue ledit adhésif.

5. Boîte selon la revendication 4, caractérisée en ce que la couche soudable à chaud est en un copolymère d'éthylène et d'acide acrylique dans lequel une partie de l'acide a réagi avex un ion métallique.

6. Boîte selon la revendication 4, caractérisée en ce que la couche soudable à chaud est en un copolymère d'éthylène et d'acide acrylique dans lequel une partie de l'acide a été transformée par réaction en un ester.

7. Boîte selon l'une quelconque des revendications précédentes, caractérisée en ce que le corps de boîte présente un rétreint (5) au niveau du bord ourlé.

8. Boîte selon l'une quelconque des revendications précédentes, caractérisée en ce que le corps de boîte est en feuille métallique ayant subi une double réduction d'épaisseur.

Fig.1

Fig.3

Fig.2

Fig.4